(19) Europäisches Patentamt
European Patent Office
Office européen des brevets

(11) **EP 4 604 317 A1**

(12) **EUROPEAN PATENT APPLICATION**
published in accordance with Art. 153(4) EPC

(43) Date of publication:
20.08.2025 Bulletin 2025/34

(51) International Patent Classification (IPC):
*H01Q 1/24* (2006.01)   *H04M 1/02* (2006.01)

(21) Application number: 24787395.3

(22) Date of filing: 15.10.2024

(86) International application number:
PCT/KR2024/015611

(87) International publication number:
WO 2025/143470 (03.07.2025 Gazette 2025/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.12.2023  KR 20230198107
20.02.2024  KR 20240024623

(71) Applicant: Samsung Electronics Co., Ltd.
Suwon-si, Gyeonggi-do 16677 (KR)

(72) Inventors:
• YUN, Yongbeen
Suwon-si, Gyeonggi-do 16677 (KR)

• SEO, Chonghwa
Suwon-si, Gyeonggi-do 16677 (KR)
• SON, Hyoungtak
Suwon-si, Gyeonggi-do 16677 (KR)
• CHOI, Taekkyun
Suwon-si, Gyeonggi-do 16677 (KR)
• KIM, Youngjong
Suwon-si, Gyeonggi-do 16677 (KR)
• KIM, Hyunsoo
Suwon-si, Gyeonggi-do 16677 (KR)

(74) Representative: Appleyard Lees IP LLP
15 Clare Road
Halifax HX1 2HY (GB)

(54) **ELECTRONIC DEVICE INCLUDING CONDUCTIVE STRUCTURE FOR IMPROVING PERFORMANCE OF ANTENNA**

(57) According to an embodiment, an electronic device includes a conductive bracket including a recess portion, and a display disposed over the conductive bracket and including a conductive layer. The electronic device includes a conductive gasket including a first surface in contact with the conductive layer and a second surface opposite to the first surface, and a non-conductive layer attached on the recess portion. The electronic device includes a conductive plate including a first part in contact with the second surface and the non-conductive layer, and a second part including a plurality of connecting portions that are in contact with the recess portion. The conductive plate is electrically connected to the conductive bracket through the second part including the plurality of connecting portions.

FIG. 4A

# Description

## [Technical Field]

The present disclosure relates to an electronic device including a conductive structure for improving an antenna performance.

## [Background Art]

A portable electronic device such as a smartphone or a tablet personal computer (tablet PC) may establish a communication channel with an external electronic device such as a base station or another portable electronic device. In order to reduce a loss of a signal received from the external electronic device or a signal transmitted to the external electronic device, the electronic device may require a structure that improves a performance of an antenna for communication with the external electronic device.

The above-described information may be provided as a related art for the purpose of helping to understand the present disclosure. No claim or determination is raised as to whether any of the above-described information may be applied as a prior art related to the present disclosure.

## [Disclosure]

## [Technical Solution]

An electronic device is disclosed. According to an embodiment, the electronic device may comprise a conductive bracket including a recess portion and a display disposed over the conductive bracket and including a conductive layer. The electronic device may comprise a conductive gasket including a first surface in contact with the conductive layer of the display and a second surface opposite to the first surface, and a portion of the conductive gasket may be disposed in the recess portion. The electronic device may comprise a non-conductive layer attached on the recess portion. The electronic device may comprise a conductive plate that includes a first part in contact with the second surface of the conductive gasket and in contact with the non-conductive layer, and a second part including a plurality of connecting portions that are in contact with the recess portion. The conductive plate may be electrically connected, through the second part including the plurality of connecting portions, to the conductive bracket.

An electronic device is disclosed. According to an embodiment, the electronic device may include a display including a conductive layer, a housing which includes a conductive bracket including a metal layer and is coupled to the display. The electronic device may include a non-conductive layer attached to a surface of the metal layer facing the display. The electronic device may include a conductive gasket including a first surface in contact with the conductive layer of the display and a second surface opposite to the first surface. The electronic device may include a conductive plate that includes a first part in contact with the second surface of the conductive gasket and disposed between the non-conductive layer and the conductive gasket, and a second part extending from the first part and including a plurality of connecting portions. The plurality of connecting portions may extend from the second part to the metal layer. The conductive plate may be electrically connected, through the second part including the plurality of connecting portions, to the conductive bracket.

## [Description of the Drawings]

FIG. 1 is a block diagram of an electronic device in a network environment according to various embodiments.

FIG. 2A is a diagram illustrating an electronic device according to an embodiment.

FIG. 2B is an exploded perspective view of an electronic device according to an embodiment.

FIG. 3A illustrates a portion of an exemplary electronic device.

FIG. 3B is a partial cross-sectional view of an exemplary electronic device cut along line A-A' of FIG. 3A.

FIG. 4A illustrates a portion of an exemplary electronic device.

FIG. 4B is a top plan view of a conductive member of an exemplary electronic device.

FIG. 4C illustrates a portion of an exemplary electronic device.

FIG. 5A illustrates a portion of an exemplary electronic device before a conductive member is compressed.

FIG. 5B illustrates a portion of an exemplary electronic device after a conductive member is compressed.

FIG. 6 illustrates a portion of an exemplary electronic device.

FIG. 7 is a graph illustrating a resistance of a current path according to a compressibility rate of a conductive member of an exemplary electronic device.

**[Mode for Invention]**

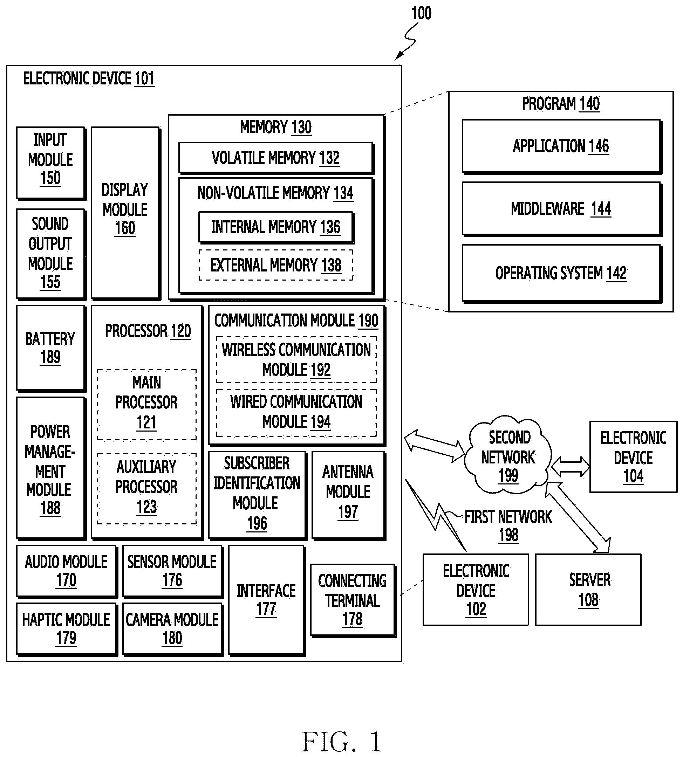

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. In an example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. In an example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

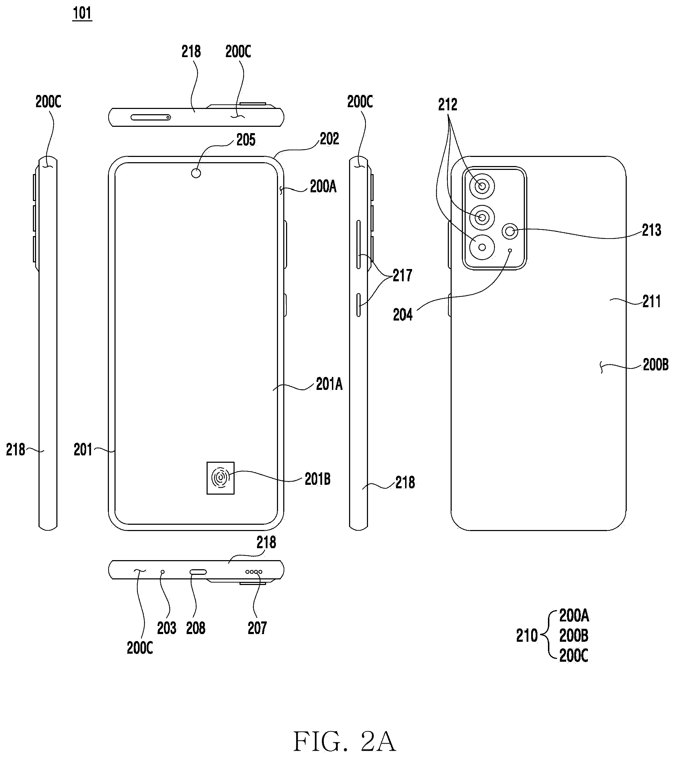

FIG. 2A is a diagram illustrating an electronic device according to an embodiment.

Referring to FIG. 2A, an electronic device 200 according to an embodiment may include a housing 210 forming an exterior of the electronic device 200. In an example, the housing 210 may include a front surface 200A, a rear surface 200B, and a side surface 200C surrounding a space between the front surface 200A and the rear surface 200B. According to an embodiment, the housing 210 may refer to a structure forming at least a portion of the front surface 200A, the rear surface 200B, and/or the side surface 200C.

The electronic device 200 according to an embodiment may include a substantially transparent front plate 202. According to an embodiment, the front plate 202 may form at least a portion of the front surface 200A. According to an embodiment, the front plate 202 may include, for example, a glass plate or a polymer plate including various coating layers, but is not limited thereto.

The electronic device 200 according to an embodiment may include a substantially opaque rear plate 211. According to an embodiment, the rear plate 211 may form at least a portion of the rear surface 200B. According to an embodiment, the rear plate 211 may be formed of coated or colored glass, ceramic, polymer, metal (e.g., aluminum, stainless steel (STS), or magnesium), or a combination of at least two of the above materials.

The electronic device 200 according to an embodiment may include a side bezel structure 218 (or a side member). According to an embodiment, the side bezel structure 218 may be coupled to the front plate 202 and/or the rear plate 211 to form at least a portion of the side surface 200C of the electronic device 200. In an example, the side bezel structure 218 may form the entire side surface 200C of the electronic device 200, and for another example, the side bezel structure 218 may form the side surface 200C of the electronic device 200 together with the front plate 202 and/or the rear plate 211.

Unlike the illustrated embodiment, when the side surface 200C of the electronic device 200 is partially formed by the front plate 202 and/or the rear plate 211, the front plate 202 and/or the rear plate 211 may include an area that is bent from a periphery part thereof toward the rear plate 211 and/or the front plate 202 and extends seamlessly. In an example, the extended area of the front plate 202 and/or the rear plate 211 may be located at both ends of a long edge of the electronic device 200, but is not limited to the above-described examples.

According to an embodiment, the side bezel structure 218 may include a metal and/or a polymer. According to an embodiment, the rear plate 211 and the side bezel structure 218 may be integrally formed and may include the same material (e.g., a metal material such as aluminum), but are not limited thereto. In an example, the rear plate 211 and the side bezel structure 218 may be formed in separate configurations and/or may include different materials.

According to an embodiment, the electronic device 200 may include at least one of a display 201, audio modules 203, 204, and 207, a sensor module (not shown), camera modules 205, 212, and 213, a key input device 217, a light emitting element (not shown), and/or a connector hole 208. According to an embodiment, the electronic device 200 may omit at least one (e.g., the key input device 217 or the light emitting element (not shown)) of the components or may additionally include another component.

According to an embodiment, the display 201 may be visually exposed through a substantial portion of the front plate 202. In an example, at least a portion of the display 201 may be visible through the front plate 202 forming the front surface 200A. According to an embodiment, the display 201 may be disposed on the rear surface of the front plate 202.

According to an embodiment, the outside appearance of the display 201 may be formed substantially the same as the outside appearance of the front plate 202 adjacent to the display 201. According to an embodiment, in order to expand an area in which the display 201 is visually exposed, a distance between the outside of the display 201 and the outside of the front plate 202 may be formed to be substantially the same.

According to an embodiment, the display 201 (or the front surface 200A of the electronic device 200) may include a screen display area 201A. According to an embodiment, the display 201 may provide visual information to a user through the screen display area 201A. In the illustrated embodiment, the screen display area 201A is illustrated as being spaced apart from the outside of the front surface 200A and located inside the front surface 200A when the front surface 200A is viewed from the front, but it is not limited thereto. In another embodiment, when the front surface 200A is viewed from the front, at least a portion of a periphery part of the screen display area 201A may substantially coincide with a periphery part of the front surface 200A (or the front plate 202).

According to an embodiment, the screen display area 201A may include a sensing area 201B configured to obtain the user's biometric information. Herein, the meaning of "the screen display area 201A includes the sensing area 201B" may be understood that at least a portion of the sensing area 201B may be overlapped the screen display area 201A. In an example, the sensing area 201B may mean an area in which visual information may be displayed by the display 201 like other areas of the screen display area 201A, and additionally obtain the user's biometric information (e.g., fingerprint). According to an embodiment, the sensing area 201B may be formed in the key input device 217.

According to an embodiment, the display 201 may include an area in which the first camera 205 is located. According to an embodiment, an opening may be formed in the area of the display 201, and the first camera 205 (e.g., a punch hole camera) may be at least partially disposed in the opening to face the front surface 200A. In this case, the screen display area 201A may surround at least a portion of a periphery part of the opening. According to an embodiment, the first camera 205 (e.g., an under display camera (UDC)) may be disposed under the display 201 to overlap the area of the display 201. In this case, the display 201 may provide visual information to the user through the area, and additionally, the first camera 205 may obtain an image corresponding to a direction facing the front surface 200A through the area of the display 201.

According to an embodiment, the display 201 may be coupled to or disposed adjacent to a touch sensing circuit, a pressure sensor capable of measuring the intensity (pressure) of the touch, and/or a digitizer that detects a magnetic field type stylus pen.

According to an embodiment, the audio modules 203, 204, and 207 may include microphone holes 203 and 204 and a speaker hole 207.

According to an embodiment, the microphone holes 203 and 204 may include a first microphone hole 203 formed in a partial area of the side surface 200C and a second microphone hole 204 formed in a partial area of the rear surface 200B. A microphone (not shown) for obtaining external sound may be disposed inside the microphone holes 203 and 204. The microphone may include a plurality of microphones to detect the direction of the sound.

According to an embodiment, the second microphone hole 204 formed in a partial area of the rear surface 200B may be disposed adjacent to the camera modules 205, 212, and 213. In an example, the second microphone hole 204 may obtain sound according to operations of the camera modules 205, 212, and 213. However, it is not limited thereto.

According to an embodiment, the speaker hole 207 may include an external speaker hole 207 and a receiver hole (not shown) for a call. The external speaker hole 207 may be formed in a portion of the side surface 200C of the electronic device 200. According to an embodiment, the external speaker hole 207 may be implemented as one hole with the microphone hole 203. Although not shown, the receiver hole (not shown) for a call may be formed in another portion of the side surface 200C. In an example, the receiver hole for a call may be formed on the opposite side of the external speaker hole 207 on the side surface 200C. In an example, based on the illustration of FIG. 2A, the external speaker hole 207 may be formed on the side surface 200C corresponding to the lower end of the electronic device 200, and the receiver hole for a call may be formed on the side surface 200C corresponding to the upper end of the electronic device 200. However, it is not limited thereto, and according to an embodiment, the receiver hole for a call may be formed at a location other than the side surface 200C. In an example, the receiver hole for a call may be formed by a space spaced apart between the front plate 202 (or the display 201) and the side bezel structure 218.

According to an embodiment, the electronic device 200 may include at least one speaker (not shown) configured to output sound to the outside of the housing through the external speaker hole 207 and/or the receiver hole (not shown) for a call.

According to an embodiment, the sensor module (not shown) may generate an electrical signal or data value corresponding to an internal operating state of the inside or an external environmental state of the electronic device 200. In an example, the sensor module includes at least one of a proximity sensor, an HRM sensor, a fingerprint sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illumination sensor.

According to an embodiment, the camera modules 205, 212, and 213 may include a first camera 205 disposed to face the front surface 200A of the electronic device 200, a second camera 212 disposed to face the rear surface 200B, and a flash 213.

According to an embodiment, the second camera 212 may include a plurality of cameras (e.g., a dual camera, a triple camera, or a quad camera). However, the second camera 212 is not necessarily limited to including a plurality of cameras, and may include one camera.

According to an embodiment, the first camera 205 and the second camera 212 may include one or a plurality of lenses, an image sensor, and/or an image signal processor.

According to an embodiment, the flash 213 may include, for example, a light emitting diode or a xenon lamp. According to an embodiment, two or more lenses (infrared camera, wide-angle and telephoto lens) and image sensors may be disposed on one surface of the electronic device 200.

According to an embodiment, the key input device 217 may be disposed on the side surface 200C of the electronic device 200. According to an embodiment, the electronic device 200 may not include some or all of the key input devices 217, and the excluded key input device 217 may be implemented on the display 201 in another form such as a soft key.

According to an embodiment, the connector hole 208 may be formed on the side surface 200C of the electronic device 200 to accommodate a connector of the external device. A connection terminal electrically connected to the connector of the external device may be disposed in the connector hole 208. The electronic device 200 according to an embodiment may include an interface module for processing electrical signals transmitted and received through the connection terminal.

According to an embodiment, the electronic device 200 may include a light emitting element (not shown). In an example, the light emitting element (not shown) may be disposed on the front surface 200A of the housing. The light emitting element (not shown) may provide state information of the electronic device 200 in a form of light. According to an embodiment, the light emitting element (not shown) may provide a light source linked with an operation of the first camera 205. In an example, the light emitting element (not shown) may include an LED, an IR LED, and/or a xenon lamp.

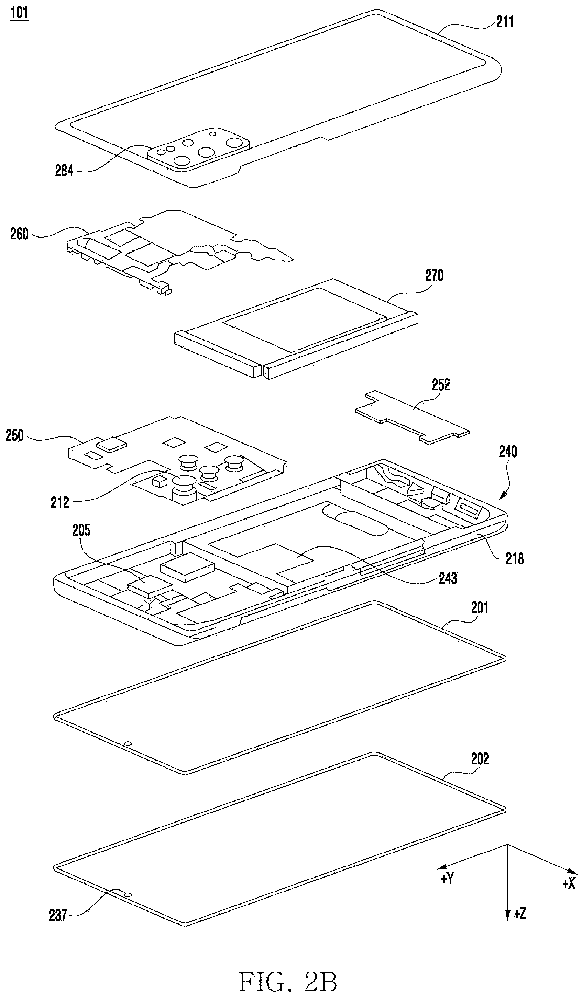

FIG. 2B is an exploded perspective view of an electronic device according to an embodiment.

Hereinafter, overlapping descriptions of a configuration having the same reference numerals as those of the above-described components will be omitted.

Referring to FIG. 2B, an electronic device 200 according to an embodiment may include a frame structure 240, a first printed circuit board 250, a second printed circuit board 252, a cover plate 260, and a battery 270.

According to an embodiment, the frame structure 240 may include a side bezel structure 218 forming an exterior (e.g., the side surface 200C of FIG. 2A) of the electronic device 200 and a support portion 243 extending inward from the side bezel structure 218. According to an embodiment, the frame structure 240 may be disposed between the display 201 and the rear plate 211. According to an embodiment, the side bezel structure 218 of the frame structure 240 may surround a space between the rear plate 211 and the front plate 202 (and/or the display 201), and the support portion 243 of the frame structure 240 may extend from the side bezel structure 218 within the space.

According to an embodiment, the frame structure 240 may support or accommodate other components included in the electronic device 200. In an example, the display 201 may be disposed on a surface of the frame structure 240 facing a direction (e.g., +z direction), and the display 201 may be supported by the support portion 243 of the frame structure 240. In an example, the first printed circuit board 250, the second printed circuit board 252, the battery 270, and the second camera 212 may be disposed on another surface of the frame structure 240 facing a direction (e.g., -z direction) opposite to the direction. The first printed circuit board 250, the second printed circuit board 252, the battery 270, and the second camera 212 may be respectively mounted on a recess defined by the side bezel structure 218 and/or the support portion 243 of the frame structure 240.

According to an embodiment, the first printed circuit board 250, the second printed circuit board 252, and the battery 270 may be coupled to the frame structure 240, respectively. In an example, the first printed circuit board 250 and the second printed circuit board 252 may be fixedly disposed on the frame structure 240 through a coupling member such as a screw. In an example, the battery 270 may be fixedly disposed on the frame structure 240 through an adhesive member (e.g., a double-sided tape). However, it is not limited by the above-described example.

According to an embodiment, the cover plate 260 may be disposed between the first printed circuit board 250 and the rear plate 211. According to an embodiment, the cover plate 260 may be disposed on the first printed circuit board 250. In an example, the cover plate 260 may be disposed on a surface facing the -z direction of the first printed circuit board 250.

According to an embodiment, the cover plate 260 may at least partially overlap the first printed circuit board 250 with respect to the z-axis. According to an embodiment, the cover plate 260 may cover at least a partial area of the first printed circuit board 250. Though this, the cover plate 260 may protect the first printed circuit board 250 from a physical impact or prevent separation of the connector coupled to the first printed circuit board 250.

According to an embodiment, the cover plate 260 may be fixedly disposed on the first printed circuit board 250 through a coupling member (e.g., a screw), or may be coupled to the frame structure 240 together with the first printed circuit board 250 through the coupling member.

According to an embodiment, the display 201 may be disposed between the frame structure 240 and the front plate 202. In an example, the front plate 202 may be disposed on a side (e.g., +z direction) of the display 201, and the frame structure 240 may be disposed on another side (e.g., -z direction).

According to an embodiment, the front plate 202 may be coupled to the display 201. The front plate 202 and the display 201 may be adhered to each other through an optical adhesive member (e.g., optically clear adhesive (OCA) or optically clear resin (OCR)) interposed therebetween.

According to an embodiment, the front plate 202 may be coupled to the frame structure 240. In an example, the front plate 202 may include an outside portion extending outside the display 201 when viewed in the z-axis direction, and may be attached with the frame structure 240 (e.g., a side bezel structure 218) through an adhesive member (e.g., a double-sided tape) disposed between the outside portion of the front plate 202 and the frame structure 240. However, it is not limited by the above-described example.

According to an embodiment, a processor, a memory, and/or an interface may be mounted on the first printed circuit board 250 and/or the second printed circuit board 252. The processor may include, for example, one or more of a central processing unit, an application processor, a graphic processing unit, an image signal processor, a sensor hub processor, or a communication processor. The memory may include, for example, volatile memory or non-volatile memory. The interface may include, for example, a high definition multimedia interface (HDMI), a universal serial bus (USB) interface, an SD card interface, and/or an audio interface. The interface may electrically or physically connect the electronic device 200 to an external electronic device, and may include a USB connector, an SD card/MMC connector, or an audio connector. According to an embodiment, the first printed circuit board 250 and the second printed circuit board 252 may be operatively or electrically connected to each other through a connection member (e.g., a flexible printed circuit board).

According to an embodiment, the battery 270 may supply power to at least one component of the electronic device 200. In an example, the battery 270 may include a rechargeable secondary cell or a fuel cell. At least a portion of the battery 270 may be disposed on substantially the same plane as the first printed circuit board 250 and/or the second printed circuit board 252.

The electronic device 200 according to an embodiment may include an antenna module (not shown). According to an embodiment, the antenna module may be disposed between the rear plate 211 and the battery 270. The antenna module may include, for example, a near field communication (NFC) antenna, a wireless charging antenna, and/or a magnetic secure transmission (MST) antenna. The antenna module may, for example, perform short-range communication with an external device or wirelessly transmit and receive power to and from the external device.

According to an embodiment, the first camera 205 (e.g., a front camera) may be disposed in at least a portion (e.g., the supporting portion 243) of the frame structure 240 so that the lens may receive external light through a partial area (e.g., the camera area 237) of the front plate 202 (e.g., the front surface 200A of FIG. 1).

According to an embodiment, the second camera 212 (e.g., a rear camera) may be disposed between the frame structure 240 and the rear plate 211. According to an embodiment, the second camera 212 may be electrically connected to the first printed circuit board 250 through a connecting member (e.g., a connector). According to an embodiment, the second camera 212 may be disposed such that the lens may receive external light through a camera area 284 of the rear plate 211 of the electronic device 200.

According to an embodiment, the camera area 284 may be formed on a surface (e.g., the rear surface 200B of FIG. 1) of the rear plate 211. According to an embodiment, the camera area 284 may be formed to be at least partially transparent so that external light may be incident to the lens of the second camera 212. According to an embodiment, at least a portion of the camera area 284 may protrude from the surface of the rear plate 211 at a predetermined height. However, it is not limited thereto, and in another embodiment, the camera area 284 may form a plane substantially the same as the surface of the rear plate 211.

According to an embodiment, the housing (e.g., the housing 210 of FIG. 2A) of the electronic device 200 may mean a configuration or structure forming at least a portion of the exterior of the electronic device 200. In this regard, at least a portion of the front plate 202, the frame structure 240, and/or the rear plate 211 forming the exterior of the electronic device 200 may be referred to as the housing 210 of the electronic device 200.

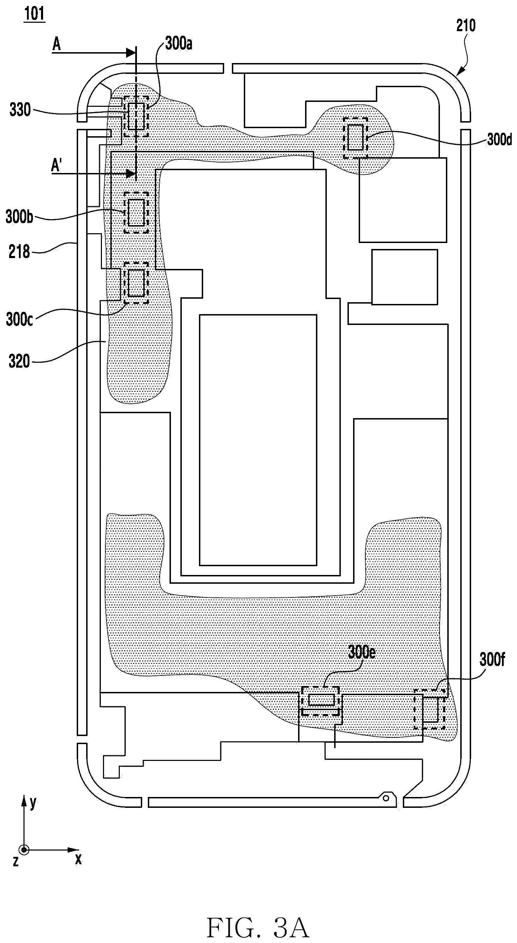

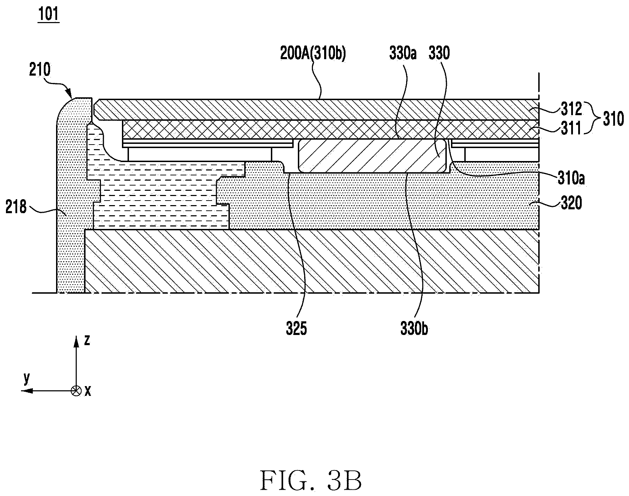

FIG. 3A illustrates a portion of an exemplary electronic device. FIG. 3B is a partial cross-sectional view of an exemplary electronic device cut along line A-A' of FIG. 3A.

Referring to FIGS. 3A and 3B, an electronic device 101 may include a housing 210, a display 310 (e.g., the display 201 of FIG. 2A) including a conductive layer 311, a conductive bracket 320, and a conductive member 330. The conductive member 330 may be referred to as a conductive gasket.

According to an embodiment, the display 310 may form at least a portion of a front surface 200A of the housing 210. In an example, the display 310 may form at least a portion of the exterior of the housing 210. In an example, the display 310 may be at least partially surrounded by a side bezel structure 218 of the housing 210. In an example, the display 310 may be coupled with the housing 210 by being fastened to the housing 210. In an example, the display 310 may include a surface 310a facing the inside (e.g., -z direction) of the housing 210 and another surface 310b opposite to the surface 310a. The other surface 310b may form at least a portion of the front surface 200A of the housing 210 by being exposed to the outside of the electronic device 101.

According to an embodiment, the conductive bracket 320 may be disposed within the housing 210. The conductive bracket 320 may include a recess portion 325 facing the display 310. In an example, the conductive bracket 320 may be an inner structure of the housing 210. The conductive bracket 320 may form at least a portion of the housing 210. In an example, the conductive bracket 320 may be surrounded by the housing 210 by being disposed between the front surface 200A of the housing 210 and a rear surface (e.g., the rear surface 200B of FIG. 2A) opposite the front surface 200A. The conductive bracket 320 may be referred to as the frame structure 240 of FIG. 2B or a structure forming at least a portion of the frame structure 240, but is not limited thereto. In an example, the conductive bracket 320 may be disposed toward the display 310 inside the housing 210 to support the display 310.

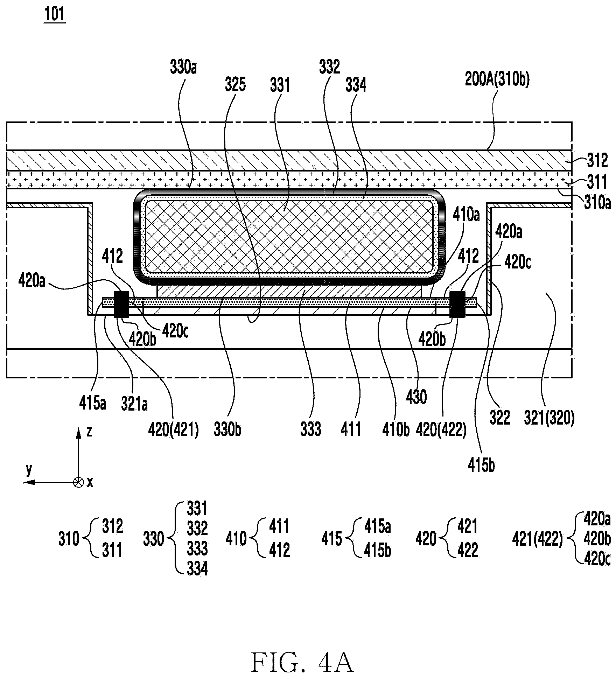

In an example, the recess portion 325 may face the surface 310a of the display 310 formed by the conductive layer 311. In an example, the recess portion 325 may accommodate at least a portion of the conductive member 330. The recess portion 325 may support the conductive member 330 by providing a space for the conductive member 330. In an example, the recess portion 325 may include a portion from which an insulation layer (e.g., an insulation layer 322 of FIG. 4A) on a metal layer (e.g., a metal layer 321 of FIG. 4A) of the conductive bracket 320 is removed, for an electrical connection between the conductive bracket 320 and the conductive member 330. The recess portion 325 may be configured to accommodate at least partially the conductive member 330 so that the metal layer 321 exposed thorough the portion from which the insulation layer 322 is removed is in contact with the conductive member 330.

According to an embodiment, the housing 210 may include one or more conductive portions (not shown) that function as an antenna (e.g., the antenna module 197 of FIG. 1) for communication with an external electronic device (e.g., the electronic device 102 of FIG. 1). In an example, the one or more conductive portions may form at least a portion of the side bezel structure 218 of the housing 210 or may be exposed to the outside of the electronic device 101 through a side surface of the housing 210 (e.g., the side surface 200C of FIG. 2A) at least partially formed by the side bezel structure 218. In an example, the conductive bracket 320 may be coupled to the side bezel structure 218 including one or more conductive portions or may be formed integrally with the side bezel structure 218. The electronic device 101 may require a conductive structure using the display 310 and the conductive bracket 320, in order to improve performance (e.g., increasing a bandwidth of a signal frequency) for a signal received from the external electronic device 102 and/or a server (e.g., the server 108 of the FIG. 1) or a signal transmitted from the electronic device to the external electronic device 102 and/or the server 108, through the one or more conductive portions functioning as an antenna.

According to an embodiment, the conductive layer 311 of the display 310 may form the surface 310a facing the conductive bracket 320. The display 310 may include the conductive layer 311 facing the conductive bracket 320 and a plurality of layers 312 disposed on the conductive layer 311 (e.g., +z direction).

In an example, although not shown, the plurality of layers 312 may include at least one substantially transparent window. The at least one window may be exposed to the outside of the electronic device 101 to form at least a portion of the front surface 200A of the housing 210. In an example, the plurality of layers 312 may include a polarizer. The polarizer may reduce the amount of light, which is reflected in the display 310 after being incident from the outside of the electronic device 101. As the amount of light reflected in the display 310 is reduced by the polarizer, visibility of the display 310 may be improved. The polarizer may be a layer attached to the at least one window of the display 310. In an example, the plurality of layers 312 may include a display panel for driving display 310. In an example, the plurality of layers 312 may include a plurality of adhesive layers for attaching the plurality of layers 312 to each other. However, an embodiment supported by the present disclosure is not limited thereto.

In an example, the conductive layer 311 may be attached to a layer facing the conductive bracket 320 among the plurality of layers 312. The conductive layer 311 may overlap the front surface 200A of the housing 210 when the display 310 is viewed from above (e.g., when viewed from the +z direction). In an example, the conductive layer 311 may be electrically connected to the conductive member 330 by being in contact with the conductive member 330. In an example, the conductive layer 311 in contact with a surface of the conductive member 330 may be electrically connected to the conductive bracket 320 in contact with another surface opposite to the surface of the conductive member 330 through the conductive member 330.

According to an embodiment, the conductive member 330 may be disposed between the conductive bracket 320 and the conductive layer 311 for communication with an external electronic device (e.g., the electronic device 102 of FIG. 1). The conductive member 330 may provide a current path between the conductive bracket 320 and the conductive layer 311.

In an example, the conductive member 330 may include a first surface 330a in contact with the conductive layer 311 and a second surface 330b opposite to the first surface 330a. According to an embodiment, the second surface 330b may be attached on the recess portion 325 (e.g., +z direction).

In an example, the conductive member 330 may be at least partially disposed within the recess portion 325 of the conductive bracket 320 to contact an inner surface of the recess portion 325. In an example, when referring to FIG. 4A together, the conductive member 330 may be disposed on a portion from which the insulation layer 322 of the conductive bracket 320 is removed among the recess portion 325. The conductive member 330 may be attached on the portion from which the insulation layer 322 of the conductive bracket 320 is removed to contact the metal layer 321 of the conductive bracket 320. The conductive member 330 may be electrically connected to the conductive bracket 320 through surface-to-surface contacting with the metal layer 321. In an example, the conductive member 330 may be disposed in an inner volume of the recess portion 325 to fill a portion of the inner volume. However, an embodiment supported by the present disclosure is not limited thereto. In an example, unlike the illustration, the recessed portion 325 may be omitted. In this case, the conductive member 330 may be disposed on the portion from which the insulation layer 322 of the conductive bracket 320 is removed to contact the metal layer 321 under the insulation layer 322 of the conductive bracket 320.

In an example, the conductive member 330 may be interposed between the conductive bracket 320 and the conductive layer 311. The conductive member 330 may be in contact with the conductive bracket 320 and the conductive layer 311. In an example, the conductive member 330 may be fasten between the conductive layer 311 and the recess portion 325. The conductive member 330 may be attached to the recess portion 325 and the conductive layer 311. In an example, the conductive member 330 may have elasticity. The conductive member 330 may be pressed by the conductive layer 311 and the conductive bracket 320, thereby pressing the conductive layer 311 in a direction (e.g., +z direction) in which the display 310 faces or pressing the conductive bracket 320 in a direction (e.g., -z direction) opposite to the direction in which display 310 faces, by a repulsion force (or restoring force) of the conductive member 330. The conductive member 330 may be configured to maintain a contact area between the conductive bracket 320 and the conductive layer 311 of the conductive member 330 by having elasticity.

In an example, a surface (e.g., the first surface 330a) of the conductive member 330 facing the display 310 may be in contact with the conductive layer 311 (or the surface 310a of the display 310 formed by the conductive layer 311). Another surface (e.g., the second surface 330b) of the conductive member 330 opposite to the surface and facing the conductive bracket 320 may be in contact with the conductive bracket 320. The other surface of the conductive member 330 may be disposed on the portion from which the insulation layer 322 among the conductive bracket 320 is removed to be in contact with the metal layer 321 of the conductive bracket 320. The conductive member 330 may electrically connect the display 310 and the conductive bracket 320 by being in contact with the conductive layer 311 and the metal layer 321.

In an example, the conductive bracket 320 may be coupled with a structure of the housing 210 (e.g., the side bezel structure 218) including one or more conductive portions that function as an antenna, or may include the one or more conductive portions (e.g., the metal layer 321) that function as an antenna. The conductive member 330 may electrically connect the conductive bracket 320 and the conductive layer 311 of the display 310 to form the current path between the conductive bracket 320 and the conductive layer 311 for communication with the external electronic device 102. In an example, when referring to FIG. 3A, the conductive member 330 may electrically connect the conductive layer 311 to the conductive bracket 320, thereby relatively increasing the surface current density of the area of the conductive bracket 320 to which the conductive member 330 is attached. The conductive member 330 may increase a bandwidth of a frequency of a signal transmitted from the electronic device 101 to the external electronic device 102 and/or a signal received from the external electronic device 102 to the electronic device 101 for communication with the external electronic device 102, by increasing surface current density of the conductive bracket 320 functioning as an antenna.

Although it is described above that the electronic device 101 includes the conductive member 330, an embodiment supported in the present disclosure is not limited thereto. The electronic device 101 may include a plurality of conductive members providing the current path between the conductive bracket 320 and the conductive layers 311. The plurality of conductive members may be disposed adjacent to the conductive bracket 320 and/or one or more conductive portions of the side bezel structure 218, which function as an antenna. In an example, when referring to FIG. 3A, the conductive bracket 320 may include a plurality of areas 300a, 300b, 300c, 300d, 300e, and 300f on which conductive members are disposed, respectively. In an example, the areas 300a, 300b, 300c, and 300d may form a current path for improving a frequency bandwidth of a main antenna of the electronic device 101, by including the conductive member 330 respectively. In an example, the areas 300e and 300f may from a current path for improving a frequency bandwidth of an auxiliary antenna of the electronic device 101, by including the conductive member 330 respectively. However, the above-described embodiments are exemplary and are not limited thereto.

According to an embodiment, the conductive member 330 and/or the metal layer 321 may be corroded by reacting through surface-to-surface contacting between the conductive member 330 and the metal layer 321 of the conductive bracket 320. Furthermore, as a non-linear resistance is generated in the current path between the conductive bracket 320 and the conductive layer 311 which are provided from the conductive member 330, by a discontinuity (or an asperity which is relatively high) of a contact surface (e.g., a surface 321a of FIG. 4A) in contact with the conductive member 330 of the metal layer 321, noise (e.g., passive intermodulation (PIM)) may be generated in a signal for communication with the external electronic device 102. The electronic device 101 may require a structure for reducing the conductive bracket 320 and/or the conductive member 320 being corroded, and for reducing the noise in the signal for communication with the external electronic device 102, by the electrical connection through surface-to-surface contacting between the conductive bracket 320 and the conductive member 330. A structure for reducing corrosion of the conductive bracket 320 and/or the conductive member 330 and noise of the signal is disclosed through an illustration and description in FIG. 4A and below.

The electronic device 101 according to above-described one or more embodiments may include the conductive member 330 providing a current path by electrically connecting the conductive layer 311 and the conductive bracket 320 of the display 310. The conductive member 330 may improve a frequency bandwidth of a signal of the electronic device 101 for communication with the external electronic device 102 by forming the current path.

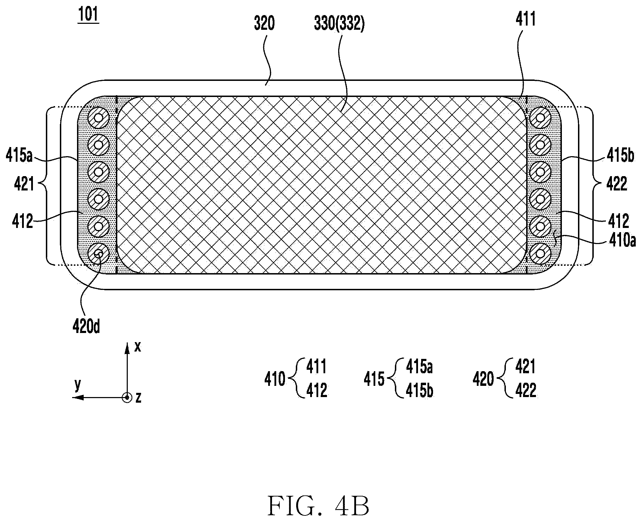

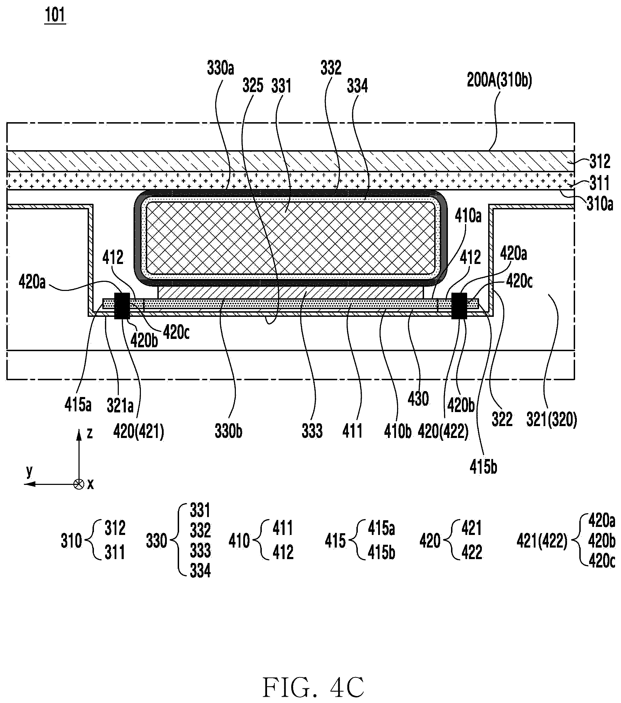

FIG. 4A illustrates a portion of an exemplary electronic device. FIG. 4B is a top plan view of a conductive member of an exemplary electronic device. FIG. 4C illustrates a portion of an exemplary electronic device.

Referring to FIGS. 4A, 4B, and 4C, an electronic device 101 may include a housing (e.g., the housing 210 of FIG. 2A), a display 310 (e.g., the display 201 of FIG. 2A) forming at least a portion of a front surface 200A of the housing 210, and a conductive bracket 320 for supporting the display 310 including a recess portion 325 disposed within the housing 210 and facing the display 310. The electronic device 101 may include the display 310 including a conductive layer 311 forming a surface 310a facing the conductive bracket 320. The electronic device 101 may include a conductive member 330 providing the current path between the conductive bracket 320 and the conductive layer 311.

According to an embodiment, the electronic device 101 may include a conductive plate 410 that is attached to the recess portion 325 of the conductive bracket 320, and includes a first part 411, and a second part 412 extending from the first part 411 and including a plurality of connecting portions 420 for an electrical connection with the conductive bracket 320.

In an example, the conductive plate 410 may be at least partially interposed between the conductive bracket 320 and the conductive member 330. In an example, the conductive plate 410 may be fasten to the conductive bracket 320 through the plurality of connecting portions 420. In an example, the conductive plate 410 may be disposed inside the recess portion 325. The conductive plate 410 may be attached on a surface of the recess portion 325 facing the display 310. In an example, the conductive plate 410 may press the conductive member 330 toward the display 310 (e.g., in a +z direction) by supporting the conductive member 330. In an example, a surface 410a of the conductive plate 410 facing the display may at least partially contact the conductive member 330. Another surface 410b opposite to the surface 410a may be disposed on the conductive bracket 320. In an example, the other surface 410b of the conductive plate 410 may face the conductive bracket 320. The other surface 410b of the conductive plate 410 may be attached on the conductive bracket 320 through a non-conductive layer 430.

In an example, the first part 411 may be connected to the second part 412. In an example, the first part 411 may be surrounded by the second part 412. The first part 411 may be an area for mounting the conductive member 330 on the conductive plate 410. In an example, when the conductive member 330 is viewed from above (e.g., when viewed from +z direction), the first part 411 may at least partially overlap the conductive member 330. In an example, the first part 411 may be an area for an electrical connection with the conductive member 330. In an example, the first part 411 may be fastened to face the conductive layer 311 by the plurality of connecting portions 420 disposed within the second part 412. In an example, the first part 411 may contact the conductive member 330 surface-to-surface through the surface 410a of the conductive plate 410. In an example, an area of the first part 411 may be larger than an area of the second part 412 for an attachment of the conductive member 330. The conductive plate 410 may include the first part 411 providing a contact surface in contact with the conductive member 330, thereby expanding the contact area with the conductive member 330 and providing the current path between the conductive bracket 320 and the conductive layer 311 together with the conductive member 330.

In an example, the second part 412 may be an area for an electrical connection with the conductive bracket 320. In an example, the second part 412 may not overlap the conductive member 330 when the conductive member 330 is viewed from above (e.g., when viewed from +z direction). In an example, the second part 412 may be an area to which the conductive member 330 is not attached. In an example, the second part 412 may be an area including a periphery 415 of the conductive plate 410. The second part 412 may be coupled to the conductive bracket 320 through the plurality of connecting portions 420, thereby fastening the conductive plate 410 to the conductive bracket 320.

In an example, the plurality of connecting portions 420 may be located within the second part 412. The plurality of connecting portions 420 may be arranged along the periphery 415 of the conductive plate 410 in the second part 412. In an example, the plurality of connecting portions 420 may form a current path between the conductive plate 410 and the conductive bracket 320 by extending from the conductive plate 410 toward the conductive bracket 320. In an example, the plurality of connecting portions 420 may be portions of the conductive plate 410 in contact with a metal layer 321 of the conductive bracket 320. In an example, the plurality of connecting portions 420 may connect the conductive plate 410 and the metal layer 321 electrically by extending from the conductive plate 410 to the metal layer 321 of the conductive bracket 320. In an example, the other surface 410b facing the conductive bracket 320 of the conductive plate 410 may be spaced apart from a surface 321a of the metal layer 321 facing the display 310 by the non-conductive layer 430. The conductive plate 410 may be in contact with the metal layer 321 through the plurality of connecting portions 420 extending to the metal layer 321 in the second part 412. As the conductive plate 410 may be in contact with the metal layer 321 through the plurality of connecting portions 420 rather than surface-to-surface contacting, the conductive plate 410 may reduce corrosion of the metal layer 321 and/or the conductive plate 410 by reacting between the metal layer 321 and the conductive plate 410 (and/or the conductive member 330).

According to an embodiment, the conductive member 330 may be attached on the first part 411 of the conductive plate 410 and disposed between the conductive plate 410 and the conductive layer 311, thereby providing the current path between the conductive bracket 320 and the conductive layer 311. In an example, the conductive member 330 may be interposed between the conductive plate 410 and the conductive layer 311. In an example, a first surface 330a of the conductive member 330 may be in contact with the surface 310a of the display 310 formed by the conductive layer 311. A second surface 330b opposite to the first surface 330a of the conductive member 330 may be in contact with the surface 410a of the conductive plate 410 facing the display 310. In an example, the conductive member 330 may extend from the conductive plate 410 to the conductive layer 311. In an example, the conductive plate 410 may be electrically connected to the conductive bracket 320 through the plurality of connecting portions 420 within the second part 412 in contact with the metal layer 321. The conductive member 330 may be electrically connected to the conductive plate 410 by being in contact with the first part 411 extending from the second part 412. The conductive member 330 may be electrically connected to the conductive layer 311 by being in contact with the surface 310a of the display 310 formed by the conductive layer 311. The conductive member 330 may provide the current path from the conductive bracket 320 to the conductive layer 311 and/or a current path from the conductive layer 311 to the conductive bracket 320 along with the conductive plate 410 connected to the conductive bracket 320 through the plurality of connecting portions 420.

According to an embodiment, the conductive bracket 320 may include the metal layer 321 and an insulation layer 322 disposed on the surface 321a of the metal layer 321 facing the display 310.

Referring to FIG. 4A, the metal layer 321 may be in contact with the non-conductive layer 430. The insulation layer 322 may be removed from a portion of the conductive bracket 320 in which the non-conductive layer 430 is disposed. In an example, the non-conductive layer 430 may be disposed between the first part 411 of the conductive plate 410 and the metal layer 321. The non-conductive layer 430 may be configured to attach the conductive plate 410 to the recess portion 325. The first part 411 of the conductive plate 410 may be spaced apart from the metal layer 321 by the non-conductive layer 430. Since the first part 411 is spaced apart from the metal layer 321 by the non-conductive layer 430, the electronic device 101 may reduce corrosion of the conductive plate 410 and/or the metal layer 321 by the surface-to-surface contacting between the first part 411 and the metal layer 321 (or the surface 321a of the metal layer 321).

Referring to FIG. 4C, at least a portion of the insulation layer 322 may be disposed between the non-conductive layer 430 and the metal layer 321. In an example, the insulation layer 322 may cover the surface 321a of the metal layer 321 facing the display 310. The plurality of connecting portions 420 may extend from the conductive plate 410 to the metal layer 321 by penetrating the insulation layer 322. However, the above-mentioned embodiments are exemplary and are not limited thereto. In an example, any one of the non-conductive layer 430 and the insulation layer 322 may be omitted. The first part 411 of the conductive plate 410 may reduce corrosion of the conductive plate 410 and/or the metal layer 321 due to the surface-to-surface contacting between the conductive plate 410 and the metal layer 321, by being spaced apart from the metal layer 321 by another configuration, which is not omitted from among the non-conductive layer 430 and the insulation layer 322.

In an example, the metal layer 321 may be a base material of the conductive bracket 320. The metal layer 321 may be a portion of the conductive bracket 320 configured to flow current by being electrically connected to the conductive plate 410. In an example, the insulation layer 322 may partially cover the surface 321a of the metal layer 321 facing the display 310. The insulation layer 322 may be formed on the metal layer 321. In an example, reactivity of the insulation layer 322 may be less than that of the metal layer 321. The insulation layer 322 may reduce that the metal layer 321 corrodes by at least partially covering the surface 321a of the metal layer 321. In an example, at least a portion of the insulation layer 322 is removed within the recess portion 325 for the non-conductive layer 430 to attach the conductive plate 410 to the recess portion 325. In an example, the insulation layer 322 may be referred to as an anodized layer through an anodizing process of the metal layer 321, but is not limited thereto.

In an example, the plurality of connecting portions 420 may extend from the second part 412 of the conductive plate 410 to the metal layer 321. The plurality of connecting portions 420 may provide a current path between the conductive plate 410 and the metal layer 321 by being connected with the metal layer 321. In an example, the non-conductive layer 430 may separate the other surface 410b facing the conductive bracket 320 of the conductive plate 410 from the surface 321a of the metal layer 321 facing the display 310, except for the plurality of connecting portions 420.

According to an embodiment, the electronic device 101 may include the non-conductive layer 430 attached on the recess portion 325. Each of the plurality of connecting portions 420 may include a first conductive portion 420a protruding from the conductive plate 410 toward the conductive layer 311, a second conductive portion 420b in contact with the metal layer 321, and a third conductive portion 420c extending from the first conductive portion 420a to the second conductive portion 420b by penetrating the second part 412 of the conductive plate 410. For example, the non-conductive layer 430 may attach the conductive plate 410 on the recess portion 325. In an example, the non-conductive layer 430 may electrically disconnect a remaining portion of the conductive plate 410 except for the plurality of connecting portions 420, by being interposed between the conductive bracket 320 and the conductive plate 410. The electronic device 101 may include the non-conductive layer 430 interposed between the conductive bracket 320 and the conductive plate 410, thereby reducing the corrosion of the conductive plate 410 and/or the conductive bracket 320 by reacting between the conductive plate 410 and the conductive bracket 320.

According to an embodiment, a size of the non-conductive layer 430 may be smaller than a size of the conductive plate 410. A thickness of the non-conductive layer 430 may be in a range of 10 $\mu$m to 50 $\mu$m. In an example, the non-conductive layer 430 may overlap the first part 411 of the conductive plate 410 when is viewed from above (e.g., when viewed in the -z direction). The non-conductive layer 430 may reduce damage to the display 310 by the conductive plate 410 and the conductive member 330 attached on the non-conductive layer 430 by having a thickness within a designated range.

In an example, the first conductive portion 420a may be a portion of the plurality of connecting portions 420 protruding from the surface 410a of the conductive plate 410 toward the display 310. Since the first conductive portion 420a is formed within the second part 412, the conductive plate 410 may provide a space in which the conductive member 330 is mounted through the first part 411 extending from the second part 412. In an example, the second conductive portion 420b may be a portion coupled to the metal layer 321. The second conductive portion 420b may be electrically connected to the metal layer 321 by contacting the metal layer 321. In an example, the third conductive portion 420c may provide a current path between the first conductive portion 420a and the second conductive portion 420b by connecting the first conductive portion 420a and the second conductive portion 420b. The third conductive portion 420c may extend from the second part 412 of the conductive plate 410 toward the metal layer 321. The plurality of connecting portions 420 may be configured to electrically connect the metal layer 321 and the conductive plate 410 by including the conductive portions 420a, 420b, and 420c, respectively. Since a contact area between the second conductive portion 420b and the metal layer 321 is smaller than an area in contact with the other surface 410b of the conductive plate 410 and the surface 321a of the metal layer 321 in surface-to-surface, a structure in which the conductive plate 410 and the metal layer 321 are connected by the plurality of connecting portions 420 may reduce corrosion of the metal layer 321 and/or the conductive plate 410.

According to an embodiment, each of the plurality of connecting portions 420 may include a hole 420d extending from the first conductive portion 420a, through the third conductive portion 420c, to the second conductive portion 420b. For example, at least a portion of the metal layer 321 may be exposed to the outside of the conductive plate 410 through each of the holes 420d of the plurality of connecting portions 420. In an example, the plurality of connecting portions 420 may be coupled to the conductive bracket 320 by welding. The hole 420d may be formed by the welding. However, a method in which the plurality connecting portions 420 is coupled to the metal layer 321 is not limited by an embodiment supported by the present disclosure, and the plurality of connecting portions 420 may be connected to the metal layer 321 through various processes.

According to an embodiment, the conductive member 330 may include an elastic member 331, a conductive film 332 covering the elastic member 331, and a first conductive adhesive member 333 attaching the conductive film 332 to the conductive plate 410 for an electrical connection between the conductive film 332 and the conductive plate 410. The conductive member 330 may include the first surface 330a in contact with the conductive layer 311 and the second surface 330b opposite to the first surface 330a. The second surface 330b may be in contact with the conductive plate 410.

In an example, the elastic member 331 may be deformable. The elastic member 331 may be pressed by the conductive layer 311, thereby pressing the conductive layer 311 by a restoring force (or repulsion force). The conductive member 330 may reduce noise of a signal for communication with an external electronic device 102 by maintaining a contact area between the conductive member 330 and the conductive layer 311 by the restoring force of the elastic member 331. In an example, the elastic member 331 may be pressed by the conductive plate 410, thereby pressing the conductive plate 410 and/or the first conductive adhesive member 333 by the restoring force (or repulsion force). The conductive member 330 may maintain a contact area between the conductive member 330 and the conductive plate 410 by the restoring force of the elastic member 331, thereby reducing the noise of the signal for communication with the external electronic device 102.

In an example, the conductive film 332 may surround the elastic member 331. The conductive film 332 may provide a conductive surface of the conductive member 330. In an example, the conductive member 330 may further include an adhesive member 334 disposed between the elastic member 331 and the conductive film 332. The adhesive member 334 may attach the conductive film 332 to the elastic member 331, thereby reducing the conductive film 332 from being separated from the elastic member 331 by the deformation of the elastic member 331. In an example, a portion of the conductive film 332 may be in contact with the conductive layer 311. The conductive film 332, for example, may electrically connect the conductive member 330 and the display 310 by being in contact with the surface 310a of the display 310 formed by the conductive layer 311.

In an example, the first conductive adhesive member 333 may be interposed between the conductive film 332 and the conductive plate 410. The first conductive adhesive member 333 may electrically connect the conductive plate 410 and the conductive film 332 by attaching the conductive film 332 to the first part 411 of the conductive plate 410. In an example, the conductive film 332 may form the first surface 330a of the conductive member 330 in contact with the conductive layer 311 of the display 310. The first conductive adhesive member 333 may form the second surface 330b of the conductive member 330 opposite to the first surface 330a in contact with the conductive plate 410. The second surface 330b of the conductive member 330 may form a current path between the conductive member 330 and the conductive plate 410 by being in contact with the surface 410a of the conductive plate 410 facing the display 310.

According to an embodiment, an asperity of the surface 410a of the conductive plate 410 facing the display 310 may be smaller than an asperity of the surface 321a of the metal layer 321 facing the display 310. In an example, when referring to FIG. 3B together, when the conductive plate 410 is omitted, the surface 321a of the metal layer 321 may be in contact with a surface 333a of the conductive member 330 formed by the first conductive adhesive member 333. As the surface 321a of the metal layer 321 may have a relatively big asperity, the noise of the signal for communication with the external electronic device 102 may be increased by a discontinuous contacting structure between the surface 321a of the metal layer 321 and the surface 333a of the conductive member 330. In an example, unlike FIG. 3B, when the conductive plate 410 is provided, the second surface 330b of the conductive member 330 formed by the first conductive adhesive member 333 may be in contact with the surface 410a (or the first part 411) of the conductive plate 410 facing the display 310. As the surface 410a of the conductive plate 410 may have a relatively small asperity, a contact area of a surface-to-surface contacting structure between the conductive plate 410 and the conductive member 330 may be increased compared to a structure in which the metal layer 321 and the conductive member 330 are in surface-to-surface contacting. The conductive plate 410 may reduce a discontinuous contacting structure with the conductive member 330 by having a relatively small asperity. The conductive plate 410 may reduce the noise of the signal for communication with the external electronic device 102 by reducing the discontinuous contacting structure with the conductive member 330.

According to an embodiment, the conductive plate 410 may include at least one of nickel and stainless steel. The conductive member 330 may include at least one of copper, nickel, and urethane. In an example, although not illustrated, the conductive plate 410 may have a structure in which a layer including nickel surrounds a base material including stainless steel. The conductive plate 410 may reduce corrosion of the conductive plate 410 and/or the conductive bracket 320 connected to the conductive plate 410 by including the layer including nickel. In an example, the elastic member 331 of the conductive member 330 may include urethane. The conductive film 332 surrounding the elastic member 331 may include at least one of copper and nickel. The conductive member 330 may provide a conductive surface for the current path between the conductive bracket 320 and the conductive layer 311, by including the conductive film 332 including at least one of copper and nickel.

According to an embodiment, the plurality of connecting portions 420 may include first connecting portions 421 and second connecting portions 422 facing the first connecting portions 421 and spaced apart from the first connecting portions 421, disposed along the periphery 415 of the conductive plate 410. In an example, the plurality of connecting portions 420 may be arranged along the periphery 415 of the conductive plate 410. In an example, a first periphery part 415a of the conductive plate 410 may be referred to as an end of the conductive plate 410. A second periphery part 415b may be referred to as another end opposite to the end of the conductive plate 410. In an example, the first connecting portions 421 may be arranged along the first periphery part 415a. The second connecting portions 422 may be spaced apart from the first connecting portions 421 by being arranged along the second periphery part 415b spaced apart from the first periphery part 415a. In an example, the conductive member 330 may be at least partially disposed between the first connecting portions 421 and the second connecting portions 422. In an example, a direction (e.g., +x direction or -x direction) in which the first connecting portions 421 are arranged may correspond to a direction in which the second connecting portions 422 are arranged, but is not limited thereto. The plurality of connecting portions 420 may fasten the conductive plate 410 on the conductive bracket 320 and maintain flatness of the conductive plate 410 for contacting with the conductive member 330, by including first connecting portions 421 and second connecting portions 422, disposed along both ends of the conductive plate 410, respectively.

According to the above-described embodiment, the electronic device 101 may reduce the corrosion of the conductive bracket 320 and/or the conductive member 330 by including the conductive plate 410 electrically connected to the conductive bracket 320 through the plurality of connecting portions 420. The conductive plate 410 may improve a frequency bandwidth of a signal for communication with the external electronic device 102 through surface-to-surface contacting with the conductive member 330. The surface 410a of the conductive plate 410 facing the display 310 may reduce noise of the signal by the surface-to-surface contacting with the conductive member 330, by having an asperity smaller than that of the surface 321a of the metal layer 321 facing the display 310.

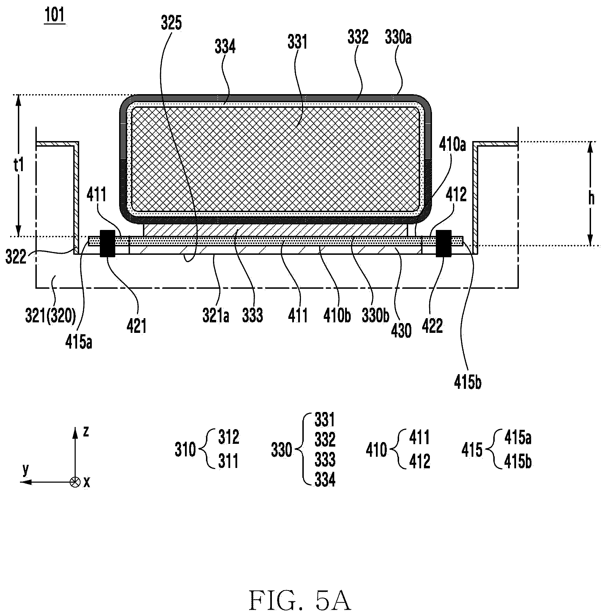

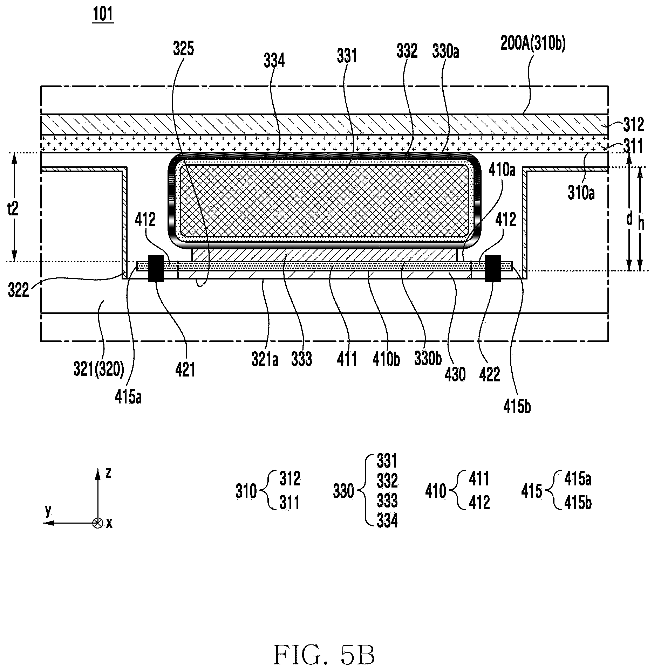

FIG. 5A illustrates a portion of an exemplary electronic device before a conductive member is compressed. FIG. 5B illustrates a portion of an exemplary electronic device after a conductive member is compressed.

Referring to FIGS. 5A and 5B, an electronic device 101 may include a conductive bracket 320 including a recess portion 325, and a display 310 disposed over the conductive bracket 320 and including a conductive layer 311. The electronic device 101 may include a conductive member 330 including a first surface 330a in contact with the conductive layer 311 of the display 310 and a second surface 330b opposite the first surface 330a, and the conductive member 330 may be disposed in the recess portion 325. The electronic device 101 may include a non-conductive layer 430 attached on the recess portion 325. The electronic device 101 may include a conductive plate 410 including a first part 411 in contact with the second surface 330b of the conductive member 330 and the non-conductive layer 430, and a second part 412 including a plurality of connecting portions 420 in contact with the metal layer 321 of the recess portion 325. The conductive plate 410 may be electrically connected to the conductive bracket 320 through the second part 412 including the plurality of connecting portions 420. According to an embodiment, the plurality of connecting portions 420 may be arranged along the periphery 415 of the conductive plate 410 (e.g., a first periphery part 415a and a second periphery part 415b).

Hereinafter, overlapping descriptions of a configuration having the same reference numerals as described in FIGS. 4A and 4B will be omitted.

According to an embodiment, the conductive member 330 may have a compressibility rate c in a range of 40% to 50%. The compressibility rate c of the conductive member 330 may be indicated as a ratio of a thickness $t2$ of the conductive member 330 after being compressed by the display 310 with respect to a thickness $t1$ of the conductive member 330 before being compressed by the display 310. The compressibility rate c of the conductive member 330 may be referred to by a following equation.

[Equation 1]

$$c/100 = 1 - (t1/t2)$$

In an example, a repulsion force of the conductive member 330 to the conductive layer 311 and the conductive plate 410 may increase non-linearly, by a restoring force of the elastic member 331 in a range of a compressibility rate c of 40% to 50%. The conductive member 330 may increase a contact area between the conductive layer 311 and the conductive plate 410 by the repulsion force, by having the compressibility rate c in a range of 40% to 50%. In an example, the repulsion force of the conductive member 330 to the conductive layer 311 may be in a range of 10 gf to 80 gf, in a range of a compressibility rate c of 40% to 50%. The conductive member 330 may have the compressibility rate c in a range of 40% to 50%, thereby reducing damage to the display 310 by the relatively high repulsion force.

According to an embodiment, a resistance of a current path between the conductive bracket 320 and the conductive layer 311 provided by the conductive member 330 (and/or the conductive plate 410) may be in a range of 50 mΩ to 200 mΩ. In an example, the conductive member 330 may provide the current path between the conductive bracket 320 and the conductive layer 311 having a resistance in a range of 50 mΩ to 200 mΩ, within a compressibility rate c in a range of 40% to 50%. The conductive member 330 may reduce noise for communication with the external electronic device 102 and reduce resistance deviation of the current path by providing a current path having a relatively small resistance.

According to an embodiment, a distance d between the conductive plate 410 and the conductive layer 311 may be greater than a depth h of the recess portion 325. In an example, the recess portion 325 may accommodate the conductive plate 410 and a portion of the conductive member 330. In an example, the distance d between the conductive plate 410 and the conductive layer 311 may correspond to value of a sum of the thickness t2 of the conductive member 330 providing the compressibility rate c in which the repulsion force of the conductive member 330 increases nonlinearly and the thickness of the conductive plate 410. As the distance d is greater than the depth h of the recess portion 325, the conductive member 330 and the conductive plate 410 may form a current path between the conductive bracket 320 and the conductive layer 311.

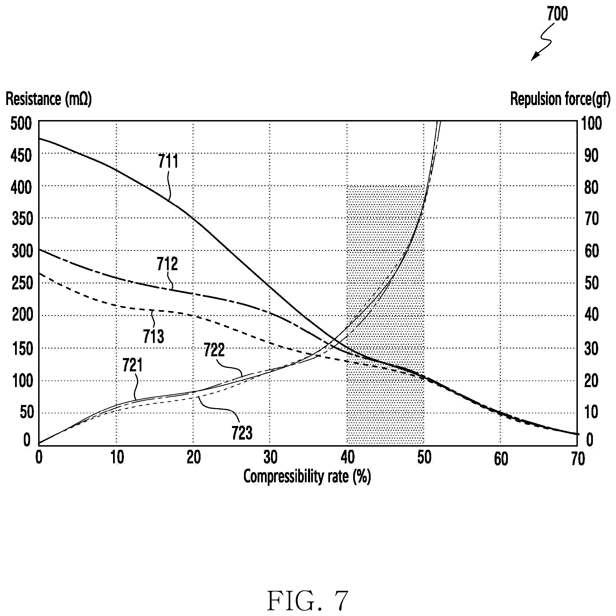

Although it has been described based on the compressibility rate c in a range of 40% to 50% of the conductive member 330, however, the above-described embodiment is exemplary, and an embodiment supported in the present disclosure is not limited thereto. In an example, the conductive member 330 may have various properties by including various conductive materials and/or elastic materials. As the thickness t2 (or a depth h and distance d of a groove) of the conductive member 330 interposed between the conductive plate 410 and the conductive layer 311 is designed to be in a range in which the repulsion force of the conductive member 330 increases nonlinearly, it may be configured to reduce noise for communication with the external electronic device 102, by securing a relatively large contact area between the conductive plate 410 and the conductive layer 311 while preventing damage to the display 310. An increase in the repulsion force of the conductive member 330 and a decrease in the noise of the signal, according to the compressibility rate c of the conductive member 330 will be described with reference to a graph of FIG. 7.

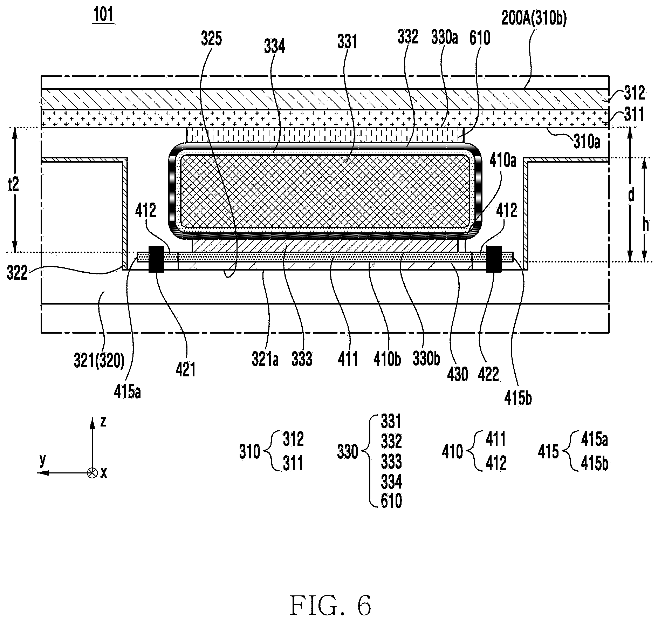

FIG. 6 illustrates a portion of an exemplary electronic device.

Referring to FIG. 6, an electronic device 101 may include a conductive bracket 320 including a recess portion 325, and a display 310 disposed on the conductive bracket 320 and including a conductive layer 311. The electronic device 101 may include a conductive member 330 including a first surface 330a in contact with the conductive layer 311 of the display 310 and a second surface 330b opposite the first surface 330a, and the conductive member 330 may be disposed in the recess portion 325. The electronic device 101 may include a non-conductive layer 430 attached on the recess portion 325. The electronic device may include a conductive plate 410 including the second surface 330b of the conductive member 330, a first part 411 in contact with the non-conductive layer 430, and a second part 412 including a plurality of connecting portions 420 in contact with the metal layer 321 of the recess portion 325. The conductive plate 410 may be electrically connected to the conductive bracket 320 through the second part 412 including the plurality of connecting portions 420.

According to an embodiment, unlike in FIGS. 4A to 5B, the conductive member 330 may include a second conductive adhesive member 610 interposed between the conductive film 332 and the conductive layer 311 for electrical connection between a conductive film 332 and the conductive layer 311. In an example, the second conductive adhesive member 610 may fasten the conductive member 330 between the conductive plate 410 and the conductive layer 311, together with a first conductive adhesive member 333. In an example, the second conductive adhesive member 610 may be interposed between the conductive film 332 and a surface 310a of the display 310 formed by the conductive layer 311. In an example, the second conductive adhesive member 610 may form the first surface 330a in contact with the conductive layer 311 of the conductive member 330. The first conductive adhesive member 333 may form the second surface 330b in contact with the conductive plate 410 of the conductive member 330. The second conductive adhesive member 610 is in contact with the surface 310a of the display 310 formed by the conductive layer 311, and the conductive film 332, thereby providing a current path between the conductive layer 311 and the conductive film 332.

According to an embodiment, the second conductive adhesive member 610 may have elasticity or may be deformable. An asperity of the second conductive adhesive member 610 may be smaller than an asperity of the conductive film 332. The second conductive adhesive member 610 may be deformable, thereby reducing damage to the display 310 by the conductive member 330. In an example, since an asperity of a surface of the second conductive adhesive member 610 in contact with the conductive layer 311 is smaller than an asperity of an external surface of the conductive film 332 (e.g., the surface 333a of FIG. 4A), the second conductive adhesive member 610 may provide a relatively large contact area with the conductive layer 311 than when the conductive film 332 in contact with the conductive layer 311. The second conductive adhesive member 610 may be in contact with the conductive later 311, thereby reducing noise of a signal for communication with the external electronic device 102 by surface-to-surface contacting between the conductive member 330 and the conductive layer 311.

According to the above-described embodiment, the conductive member 330 of the electronic device 101 may include the second conductive adhesive member 610 in contact with the conductive layer 311, thereby improving a frequency bandwidth of the signal for communication with the external electronic device 102. As the second conductive adhesive member 610 has an asperity smaller than that of the conductive film 332, noise of the signal by surface-to-surface contacting with the conductive layer 311 may be reduced.

FIG. 7 is a graph illustrating a resistance of a current path according to a compressibility rate of a conductive member of an exemplary electronic device.

Referring to FIG. 7, a horizontal axis of a graph 700 indicates a compressibility rate of a conductive member (e.g., the conductive member 330 of FIG. 3A) of an electronic device (e.g., the electronic device 101 of FIG. 1). A first vertical axis of one side of the graph 700 indicates a resistance of a current path between a supporting plate (e.g., the conductive bracket 320 of FIG. 3A) provided by the conductive member 330 and a conductive layer (e.g., the conductive layer 311 of FIG. 3B) of a display (e.g., the display 201 of FIG. 2A, the display 310 of FIG. 3B). A second vertical axis of another side opposite to the one side of the graph 700 indicates a repulsion force of the conductive member 330.

Graphs 711, 712, and 713 related to the horizontal axis and the first vertical axis of the graph 700 will be described. The graphs 711, 712, and 713 indicate resistances of current paths between the conductive bracket 320 and the conductive layer 311 provided respectively by the conductive members according to compressibility rates of each of the conductive members having different characteristics. Referring to the graph 711, a first conductive member may provide a current path between the conductive bracket 320 and the conductive layer 311 having a resistance in a range of 100 mΩ to 200 mΩ, in a range of a compressibility rate of 40% to 50%. Referring to the graph 712, a second conductive member may provide a current path between the conductive bracket 320 and the conductive layer 311 having a resistance in the range of 100 mΩ to 200 mΩ, in the range of the compressibility rate of 40% to 50%. Referring to the graph 713, a third conductive member may provide a current path between the conductive bracket 320 and the conductive layer 311 having a resistance in the range of 100 mΩ to 200 mΩ, in the range of the compressibility rate of 40% to 50%. The conductive member 330 provides a current path between the conductive bracket 320 and the conductive layer 311 having a resistance in the range of 100 mΩ to 200 mΩ, in the range of the compressibility rate of 40% to 50%, thereby reducing resistance deviation of the current path for communication with an external electronic device (e.g., the electronic device 102 of FIG. 1), and reducing noise of a signal for communication with the external electronic device 102.

Graphs 721, 722, and 723 related to the horizontal axis and the second vertical axis of the graph 700 will be described. The graphs 721, 722, and 723 indicate repulsion forces of each of the conductive members according to a compressibility rate of each of the conductive members respectively having different characteristics. Referring to the graphs 721, 722, and 723, the conductive members may be configured to non-linearly increase the repulsion force as the compressibility rate increases in the range of the compressibility rate of 40% to 50%. The conductive member 330 may maintain or increase a contact area of the conductive member 330 in contact with a conductive plate (e.g., the conductive plate 410 of FIG. 4A) and the conductive layer 311 by using the non-linearly increasing repulsion force. Referring to the graph 721, the first conductive member may secure a contact area between the conductive plate 410 and the conductive layer 311 and reduce damage to the display 310, by having a repulsion force in a range of 30gf to 80gf, in the range of the compressibility rate of 40% to 50%. Referring to the graph 722, the second conductive member may secure the contact area between the conductive plate 410 and the conductive layer 311 and reduce the damage to the display 310, by having a repulsion force in the range of 30gf to 80gf, in the range of the compressibility rate of 40% to 50%. Referring to the graph 723, the third conductive member may secure the contact area between the conductive plate 410 and the conductive layer 311 and reduce the damage to the display 310, by having a repulsion force in the range of 30gf to 80gf, in the range of the compressibility rate of 40% to 50%.

According to an embodiment, an electronic device (e.g., the electronic device 101 of FIG. 1) may comprise a conductive bracket (e.g., the conductive bracket 320 of FIG. 3A) including a recess portion (e.g., the recess portion 325 of FIG. 3B) and a display (e.g., the display 201 of FIG. 2A and the display 310 of FIG. 2B) disposed over the conductive bracket and including a conductive layer. The electronic device may comprise a conductive gasket including a first surface (e.g., the first surface 330a of FIG. 3B) in contact with the conductive layer of the display and a second surface (e.g., the second surface 330b of FIG. 3B) opposite to the first surface, and a portion of the conductive gasket may be disposed in the recess portion. The electronic device may comprise a non-conductive layer (e.g., the non-conductive layer 430 of FIG. 4A) attached on the recess portion. The electronic device may comprise a conductive plate including a first part (e.g., the first part 411 of FIG. 4A) in contact with the second surface of the conductive gasket and the non-conductive layer, and a second part (e.g., the second part 412 of FIG. 4A) including a plurality of connecting portions that are in contact with the recess portion. The conductive plate may be electrically connected, through the second part including the plurality of connecting portions, to the conductive bracket.

For example, the plurality of connecting portions may be coupled to the conductive bracket by welding.

For example, the plurality of connecting portions may include first connecting portions (e.g., the first connection portions 421 of FIG. 4B) and second connecting portions (e.g., the second connection portions 422 of FIG. 4B) facing the first connecting portions and spaced apart from the first connecting portions, the first connecting portions and the second connecting portions are disposed along a periphery (e.g., the periphery 415 of FIG. 4A) of the conductive plate.

For example, the conductive bracket may further include a metal layer (e.g., the metal layer 321 of FIG. 4A) and an insulation layer (e.g., the insulation layer 322 of FIG. 4A) disposed on the metal layer. The plurality of connecting portions may extend from the conductive plate, by penetrating the insulation layer, to the metal layer.

For example, each of the plurality of connecting portions may include a first conductive portion (e.g., the first conductive portion 420a of FIG. 4A) protruding from the conductive plate towards the conductive layer, a second conductive portion (e.g., the second conductive portion 420b of FIG. 4A) in contact with the metal layer, and a third conductive portion (e.g., the third conductive portion 420c of FIG. 4A) extending from the first conductive portion, by penetrating the second part, to the second conductive portion.

For example, each of the plurality of connecting portions may further include a hole (e.g., the hole 420d of FIG. 4B) extending from the first conductive portion, through the third conductive portion, to the second conductive portion.

For example, the conductive gasket may have a compressibility rate in a range of 40% to 50%.

For example, a resistance of a current path between the conductive bracket and the conductive layer may be in a range of 50 m$\Omega$ to 200 m$\Omega$.

For example, the conductive gasket may include an elastic member (e.g., the elastic member 331 of FIG. 4A), a conductive film (e.g., the conductive film 332 of FIG. 4A) covering the elastic member, and a first conductive adhesive member (e.g., the first conductive adhesive member 333 of FIG. 4A) attaching the conductive film to the conductive plate for an electrical connection between the conductive film and the conductive plate.

For example, the conductive gasket may further include a second conductive adhesive member (e.g., the second conductive adhesive member 610 of FIG. 6) interposed between the conductive film and the conductive layer for an electrical connection between the conductive film and the conductive layer.

For example, the conductive gasket may be at least partially disposed in the recess portion. A distance (e.g., d of FIG. 5B) between the conductive plate and the conductive layer may be greater than a depth (e.g., h of FIG. 5A) of the recess portion 325.

For example, the conductive bracket may further include a metal layer disposed under the insulation layer. An asperity of a surface (e.g., the surface 410a of FIG. 4A) of the conductive plate facing the display may be smaller than an asperity of a surface (e.g., the surface 321a of FIG. 4A) of the metal layer facing the insulation layer.

For example, a size of the non-conductive layer may be smaller than a size of the conductive plate. A thickness of the non-conductive layer above may be in a range of 10$\mu$m to 50$\mu$m.

For example, a repulsion force of the conductive gasket to the conductive layer may be in a range of 10gf to 80gf.

For example, the conductive plate may include at least one of nickel, and stainless steel. The conductive gasket may include at least one of copper, nickel, and urethane.

According to an embodiment, an electronic device may include a display including a conductive layer, a housing which includes a conductive bracket including a metal layer and is coupled to the display. The electronic device may include a non-conductive layer attached to a surface of the metal layer facing the display. The electronic device may include a conductive gasket including a first surface in contact with the conductive layer of the display and a second surface opposite to the first surface. The electronic device may include a conductive plate including a first part in contact with the second surface of the conductive gasket and disposed between the non-conductive layer and the conductive gasket, and a second part extending from the first part and including a plurality of connecting portions. The plurality of connecting portions may extend from the second part to the metal layer. The conductive plate may be electrically connected, through the second part including the plurality of connecting portions, to the conductive bracket.

For example, each of the plurality of connecting portions may include a first conductive portion protruding from the conductive plate towards the conductive layer, a second conductive portion in contact with the metal layer, and a third conductive extending from the first conductive portion, by penetrating the second part, to the second conductive portion.

For example, the plurality of connecting portions may include first connecting portions and second connecting portions facing the first connecting portions and spaced apart from the first connecting portions, the first connecting portions and the second connecting portions are disposed along a periphery of the conductive plate. A direction in which the first connection portions are arranged may correspond to a direction in which the second connection portions are arranged.

For example, the conductive gasket may have a compressibility rate in a range of 40% to 50%. A resistance of the current path between the conductive bracket and the conductive layer may be in a range of 50 m$\Omega$ to 200 m$\Omega$.

For example, the conductive gasket may include an elastic member, a conductive film covering the elastic member, and a first conductive adhesive member attaching the conductive film to the conductive plate for an electrical connection between the conductive film and the conductive plate, and a second conductive adhesive member interposed between the conductive film and the conductive layer for an electrical connection between the conductive film and the conductive layer.

According to an embodiment, an electronic device (e.g., the electronic device 101 of FIG. 1) may include a housing (e.g., the housing 210 of FIG. 2A), a display (e.g., the display 201 of FIG. 2A, the display 310 of FIG. 3B) forming at least a portion of a front surface (e.g., the front surface 200A in FIG. 2A) of the housing, and a conductive bracket (the conductive bracket 320 of FIG. 3A) for supporting the display, which is disposed within the housing and includes a recess portion (e.g., the recess portion 325 in FIG. 3B) facing the display. The electronic device may include a conductive layer (e.g., the conductive layer 311 of FIG. 3B) forming a surface (e.g., the surface 310a of FIG. 3B) facing the conductive bracket of the display. The electronic device may include a conductive plate (e.g., the conductive plate 410 of FIG. 4A) attached to the recess portion, and including a first part (e.g., the first part 411 of FIG. 4B) and a second part which is extended from the first part and includes a plurality of connecting portions (e.g., the plurality of connecting portions 420 of FIG. 4A) for an electrical connection with the conductive bracket. The electronic device may include a conductive member (e.g., the conductive member 330 of FIG. 3A) providing a current path between the conductive bracket and the conductive layer for communication with an external electronic device, by attaching on the first part and being disposed between the conductive plate and the conductive layer.

For example, the plurality of connecting portions may include first connecting portions (e.g., the first connection portions 421 of FIG. 4A) and second connecting portions (e.g., the second connection portions 422 of FIG. 4A) facing the first connecting portions and spaced apart from the first connecting portions, the first connecting portions and the second connecting portions are disposed along a periphery (e.g., the periphery 415 of FIG. 4A) of the conductive plate.

For example, the conductive bracket may further include a metal layer (e.g., the metal layer 321 of FIG. 4A) and an insulation layer (e.g., the insulation layer 322 of FIG. 4A) disposed on a surface (e.g., the surface 321a of FIG. 4A) facing the display of the metal layer. The plurality of connecting portions may extend from the conductive plate, by penetrating the insulation layer, to the metal layer.

For example, the electronic device may further include a non-conductive layer (e.g., the non-conductive layer 430 of FIG. 4A) interposed between the conductive plate and the insulation layer. Each of the plurality of connecting portions may include a first conductive portion (e.g., the first conductive portion 420a of FIG. 4A) protruding from the conductive plate towards the conductive layer, a second conductive portion (e.g., the second conductive portion 420b of FIG. 4A) in contact with the metal layer, and a third conductive portion (e.g., the third conductive portion 420c of FIG. 4A) extending from the first conductive portion, by penetrating the conductive plate, the non-conductive layer and the insulation layer, to the second conductive portion.

For example, each of the plurality of connecting portions may include a hole (e.g., the hole 420d of FIG. 4B) extending to the metal layer by penetrating the conductive plate and the insulation layer.

For example, the conductive member may have a compressibility rate in a range of 40% to 50%.

For example, a resistance of a current path between the conductive bracket and the conductive layer may be in a range of 50 m$\Omega$ to 200 m$\Omega$.

For example, the conductive member may include an elastic member (e.g., the elastic member 331 of FIG. 4A), a conductive film (e.g., the conductive film 332 of FIG. 4A) covering the elastic member, and a first conductive adhesive member (e.g., the first conductive adhesive member 333 of FIG. 4A) attaching the conductive film to the conductive plate for an electrical connection between the conductive film and the conductive plate.

For example, the conductive member may further include a second conductive adhesive member (e.g., the second conductive adhesive member 610 of FIG. 6) interposed between the conductive film and the conductive layer for an electrical connection between the conductive film and the conductive layer.

For example, the conductive member may be at least partially disposed in the recess portion. A distance (e.g., d of FIG. 5B) between the conductive plate and the conductive layer may be greater than a depth (e.g., h of FIG. 5A) of the recess portion 325.

For example, the conductive bracket may further include a metal layer, and an insulation layer disposed on a surface facing the display of the metal layer. An asperity of a first surface of the conductive plate facing the display may be smaller than an asperity of the surface of the metal layer.

For example, the plurality of connecting portions may be coupled to the conductive bracket by welding.

For example, a repulsion force of the conductive member to the conductive layer may be in a range of 10gf to 80gf.

For example, the conductive plate may include at least one of nickel, and stainless steel. The conductive member may include at least one of copper, nickel, and urethane.

According to an embodiment, an electronic device may include a display (e.g., the display 201 of FIG. 2A, the display 310 of FIG. 4A). The electronic device may include a housing which includes a conductive bracket (e.g., the conductive bracket of FIG. 3) including the metal layer (e.g., the metal layer 321 of FIG. 4A) and an insulation layer (e.g., the insulation layer 322 of FIG. 4A) dispose on a surface (the surface 321a of FIG. 4A) facing the display of the metal layer, and is coupled with the display. The electronic device may include a conductive layer (e.g., the conductive layer 311 of FIG. 3B) forming a surface (e.g., the surface 310b of FIG. 3B) facing the conductive bracket of the display. The electronic device may include a conductive plate (the conductive plate of FIG. 4A) including a first part (e.g., the first part 411 of FIG. 4A) and a second part (e.g., the second part 412 of FIG. 4A) extending from the first part, which is attached to the conductive bracket, and includes a plurality of connecting portion (e.g., the plurality of connection parts 420 of FIG. 4A) extending to the metal layer for an electrical connection with the conductive bracket by penetrating the insulation layer. The electronic device may include a conductive member (e.g., the conductive member 330 of FIG. 3B) providing a current path between the conductive bracket and the conductive layer for communication with an external electronic device, by attaching to the first part and being disposed between the conductive plate and the conductive layer.

For example, the electronic device may further include a non-conductive layer (e.g., the non-conductive layer 430 of FIG. 4A) interposed between the conductive plate and the insulation layer. Each of the plurality of connecting portions may include a first conductive portion (e.g., the first conductive portions 420a of FIG. 4A) protruding from the conductive plate towards the conductive layer, a second conductive portion (e.g., the second conductive portion 420b of FIG. 4A) in contact with the metal layer, and a third conductive portion (e.g., the third conductive portion 420c of FIG. 4A) extending from the first conductive portion, by penetrating the conductive plate and the insulating layer, to the second conductive portion.

For example, the plurality of connecting portions may include first connecting portions (e.g., the first connection portions 421 of FIG. 4A) and second connecting portions (e.g., the second connection portions 422 of FIG. 4A) facing the first connecting portions and spaced apart from the first connecting portions, the first connecting portions and the second connecting portions are disposed along a periphery (e.g., the periphery 415 of FIG. 4A) of the conductive plate. A direction in which the first connecting portions are arranged may correspond to a direction in which the second connecting portions are arranged.

For example, the conductive member may have a compressibility rate in a range of 40% to 50%. A resistance of the current path between the conductive bracket and the conductive layer may be in a range of 50 m$\Omega$ to 200 m$\Omega$.

For example, the conductive member may include an elastic member, a conductive film covering the elastic member, and a first conductive adhesive member (e.g., the first conductive adhesive member 333 of FIG. 4A) attaching the conductive film to the conductive plate for an electrical connection between the conductive film and the conductive plate, and a second conductive adhesive member (e.g., the second conductive adhesive member 610 of FIG. 6) interposed between the conductive film and the conductive layer for an electrical connection between the conductive film and the conductive layer.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:

   a conductive bracket (320), including a recess portion (325);
   a display (201; 310), disposed over the conductive bracket (320), including a conductive layer (311);
   a conductive gasket (330) including a first surface (330a) in contact with the conductive layer (311) of the display (201; 310) and a second surface (330b) opposite to the first surface, at least a portion of the conductive gasket (330) being disposed in the recess portion (325);
   a non-conductive layer (430) attached on the recess portion (325); and
   a conductive plate (410) including:

      a first part (411), in contact with the second surface (330b) of the conductive gasket (330) and the non-conductive layer (430); and
      a second part (412), including a plurality of connecting portions (420) that are in contact with the recess portion (325),

   wherein the conductive plate (410) is electrically connected, through the second part (412) including the plurality of connecting portions (420), to the conductive bracket (320).

2. The electronic device of claim 1,
   wherein, the plurality of connecting portions (420) are coupled to the conductive bracket (320) by welding.

3. The electronic device of claim 1 or 2,

   wherein, the plurality of connecting portions (420) includes first connecting portions (421) and second connecting portions (422) facing the first connecting portions (421) and spaced apart from the first connecting portions (421), wherein the first connecting portions (421) and the second connecting portions (422) are disposed along a periphery (415) of the conductive plate (410).

4. The electronic device of any one of claims 1 to 3, wherein, the conductive bracket (320) further includes:

   a metal layer (321); and
   an insulation layer (322) disposed on the metal layer (322),
   wherein, each of the plurality of connecting portions (420) extends from the conductive plate (410), by penetrating the insulation layer (322), to the metal layer (321).

5. The electronic device of claim 4, wherein each of the plurality of connecting portions (420) includes:

   a first conductive portion (420a) protruding from the conductive plate (410) towards the conductive layer (311);
   a second conductive portion (420b) in contact with the metal layer (321); and
   a third conductive portion (420c) extending from the first conductive portion (420a), penetrating the second part (412), to the second conductive portion (420b).

6. The electronic device of claim 5, wherein, each of the plurality of connecting portions (420) further includes a hole (420d) extending from the first conductive portion (420a), through the third conductive portion (420c), to the second conductive portion (420b).

7. The electronic device of any one of claims 1 to 6, wherein, the conductive gasket (330) has a compressibility rate in a range of 40% to 50%

8. The electronic device of any one of claims 1 to 7, wherein, a resistance of a current path between the conductive bracket (320) and the conductive layer (311) is in a range of 50mΩ to 200mΩ.

9. The electronic device of any one of claims 1 to 8, wherein, the conductive gasket (330) includes:

   an elastic member (331);

a conductive film (332) covering the elastic member (331); and
a first conductive adhesive member (333) attaching the conductive film (332) to the conductive plate (410) for an electrical connection between the conductive film (332) and the conductive plate (410).

10. The electronic device of claim 9, wherein, the conductive gasket (330) further includes a second conductive adhesive member (610) interposed between the conductive film (332) and the conductive layer (311) for an electrical connection between the conductive film (332) and the conductive layer (311).

11. The electronic device of any one of claims 1 to 10, wherein, a distance between the conductive plate (410) and the conductive layer (311) is greater than a depth of the recess portion (325).

12. The electronic device of any one of claims 1 to 11,

    wherein, the conductive bracket (320) further includes a metal layer (321) in contact with the non-conductive layer (430), wherein, an asperity of a surface (410a) of the conductive plate (410) facing the display (201; 310) is smaller than an asperity of a surface (321a) of the metal layer (321) in contact with the non-conductive layer (430).

13. The electronic device of any one of claims 1 to 12,

    wherein, a size of the non-conductive layer (430) is smaller than a size of the conductive plate (410), and
    wherein, a thickness of the non-conductive layer (430) is in a range of 10μm to 50μm.

14. The electronic device of any one of claims 1 to 13, wherein, a repulsion force of the conductive gasket (330) to the conductive layer (311) is in a range of 10gf to 80gf.

15. The electronic device of any one of claims 1 to 14,

    wherein, the conductive plate (410) comprises at least one of nickel, and stainless steel, and
    wherein, the conductive gasket (330) comprises at least one of copper, nickel, and urethane.

100

ELECTRONIC DEVICE 101

| | | |
|---|---|---|
| INPUT MODULE 150 | DISPLAY MODULE 160 | MEMORY 130 |
| SOUND OUTPUT MODULE 155 | | VOLATILE MEMORY 132 |
| | | NON-VOLATILE MEMORY 134 |
| | | INTERNAL MEMORY 136 |
| | | EXTERNAL MEMORY 138 |

PROGRAM 140

APPLICATION 146

MIDDLEWARE 144

OPERATING SYSTEM 142

| | | |
|---|---|---|
| BATTERY 189 | PROCESSOR 120 | COMMUNICATION MODULE 190 |
| | MAIN PROCESSOR 121 | WIRELESS COMMUNICATION MODULE 192 |
| POWER MANAGE-MENT MODULE 188 | AUXILIARY PROCESSOR 123 | WIRED COMMUNICATION MODULE 194 |
| | | SUBSCRIBER IDENTIFICATION MODULE 196 · ANTENNA MODULE 197 |

| | | |
|---|---|---|
| AUDIO MODULE 170 | SENSOR MODULE 176 | INTERFACE 177 · CONNECTING TERMINAL 178 |
| HAPTIC MODULE 179 | CAMERA MODULE 180 | |

SECOND NETWORK 199

ELECTRONIC DEVICE 104

FIRST NETWORK 198

ELECTRONIC DEVICE 102

SERVER 108

FIG. 1

FIG. 2A

FIG. 2B

FIG. 3A

101

FIG. 3B

310 { 312 / 311    330 { 331 / 332 / 333 / 334    410 { 411 / 412    415 { 415a / 415b    420 { 421 / 422    421(422) { 420a / 420b / 420c

FIG. 4A

FIG. 4B

101

FIG. 4C

101

325 334 331 332 330a

t1

410a

411

412

322

321(320)    321a 333    411  410b 330b    422
415a    421                                  430
                                                415b

z
y    x

310 { 312
      311

330 { 331
      332
      333
      334

410 { 411
      412

415 { 415a
      415b

FIG. 5A

FIG. 5B

FIG. 6

700

FIG. 7

## INTERNATIONAL SEARCH REPORT

| International application No. |
| --- |
| **PCT/KR2024/015611** |

| | |
| --- | --- |
| **A.** | **CLASSIFICATION OF SUBJECT MATTER** |
| | **H01Q 1/24**(2006.01)i; **H04M 1/02**(2006.01)i |

According to International Patent Classification (IPC) or to both national classification and IPC

| **B.** | **FIELDS SEARCHED** |
| --- | --- |

Minimum documentation searched (classification system followed by classification symbols)

H01Q 1/24(2006.01); G06F 1/16(2006.01); H01Q 1/38(2006.01); H01R 4/04(2006.01); H01R 4/48(2006.01); H05K 5/00(2006.01); H05K 5/02(2006.01); H05K 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디스플레이(display), 가스켓(gasket), 리세스(recess), 도전성 플레이트 (conductive plate)

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| A | CN 114122748 A (HUAWEI TECHNOLOGY CO., LTD.) 01 March 2022 (2022-03-01)<br>See paragraphs [0070]-[0084] and figures 5-10. | 1-15 |
| A | JP 2011-082320 A (PANASONIC CORP.) 21 April 2011 (2011-04-21)<br>See paragraph [0028] and figures 9-10. | 1-15 |
| A | KR 10-2022-0125440 A (SAMSUNG ELECTRONICS CO., LTD.) 14 September 2022 (2022-09-14)<br>See paragraphs [0032]-[0033] and figures 4-8. | 1-15 |
| A | KR 10-2022-0015758 A (SAMSUNG ELECTRONICS CO., LTD.) 08 February 2022 (2022-02-08)<br>See claims 1-15 and figures 2a-17. | 1-15 |
| A | KR 10-2013-0097661 A (APPLE INC.) 03 September 2013 (2013-09-03)<br>See claims 1-11 and figures 1-5b. | 1-15 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 January 2025** | **22 January 2025** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

International application No.

**PCT/KR2024/015611**

| Patent document cited in search report | | | Publication date (day/month/year) | Patent family member(s) | | | Publication date (day/month/year) |
|---|---|---|---|---|---|---|---|
| CN | 114122748 | A | 01 March 2022 | None | | | |
| JP | 2011-082320 | A | 21 April 2011 | JP | 5335636 | B2 | 06 November 2013 |
| KR | 10-2022-0125440 | A | 14 September 2022 | None | | | |
| KR | 10-2022-0015758 | A | 08 February 2022 | CN | 116134800 | A | 16 May 2023 |
| | | | | EP | 4175063 | A1 | 03 May 2023 |
| | | | | EP | 4175063 | A4 | 20 December 2023 |
| | | | | US | 2023-0195186 | A1 | 22 June 2023 |
| | | | | WO | 2022-025522 | A1 | 03 February 2022 |
| KR | 10-2013-0097661 | A | 03 September 2013 | CN | 203521588 | U | 02 April 2014 |
| | | | | CN | 203707324 | U | 09 July 2014 |
| | | | | DE | 202013001660 | U1 | 05 June 2013 |
| | | | | KR | 10-1413313 | B1 | 27 June 2014 |
| | | | | US | 2013-0223836 | A1 | 29 August 2013 |
| | | | | US | 2014-0226291 | A1 | 14 August 2014 |
| | | | | US | 8712233 | B2 | 29 April 2014 |
| | | | | US | 9137891 | B2 | 15 September 2015 |

Form PCT/ISA/210 (patent family annex) (July 2022)